# EUROPÄISCHE PATENTSCHRIFT

(11) **EP 1 753 620 B1**
(45) Veröffentlichungstag und Bekanntmachung des Hinweises auf die Patenterteilung: **26.03.2008**
(21) Anmeldenummer: 05758919.4
(22) Anmeldetag: 10.06.2005
(51) Int. Cl.: B41F 19/06, B29C 59/04, B41F 19/02

(54) **VORRICHTUNG ZUM ANBRINGEN MINDESTENS EINES FLÄCHENABSCHNITTS EINER ÜBERTRAGUNGSLAGE EINER TRANSFERFOLIE AUF EINER MATERIALBAHN UND DEREN VERWENDUNG**
DEVICE FOR APPLYING AT LEAST ONE SURFACE SECTION OF A TRANSFER LAYER OF A TRANSFER FILM TO A WEB OF MATERIAL AND THE USE THEREOF
DISPOSITIF CONCU POUR APPLIQUER AU MOINS UNE SECTION DE SURFACE D'UNE COUCHE DE TRANSFERT D'UN FILM DE TRANSFERT SUR UNE BANDE DE MATIERE ET UTILISATION DE CE DISPOSITIF

(30) Priorität: 11.06.2004 DE 102004028524
(43) Veröffentlichungstag der Anmeldung: 21.02.2007
(73) Patentinhaber: LEONHARD KURZ Stiftung & Co. KG, 90763 Fürth (DE)
(72) Erfinder: MITSAM, Reinwald, 90579 Langenzenn (DE); GWOSDZ-KAUPMANN, Michael, 90513 Zirndorf (DE)
(74) Vertreter: LOUIS, PÖHLAU, LOHRENTZ
(86) Internationale Anmeldenummer: PCT/DE2005/001039
(87) Internationale Veröffentlichungsnummer: WO 2005/120832

(56) Entgegenhaltungen:
- EP-A- 1 175 997
- DE-A1- 3 210 551
- US-A- 3 948 709
- US-A- 4 909 888
- US-A- 5 368 680

## Beschreibung

Die Erfindung betrifft eine Vorrichtung zum Anbringen mindestens eines Flächenabschnitts einer Übertragungslage einer Transferfolie auf einer Materialbahn, wobei die Vorrichtung mindestens eine Stützwalze und mindestens eine Andruckrolle zum Andrücken der Materialbahn und der Transferfolie an die mindestens eine Stützwalze aufweist, wobei die mindestens eine Andruckrolle mittels mindestens einer federnden Anordnung federnd gelagert ist und wobei die Vorrichtung mindestens eine Einstelleinrichtung zur Änderung einer Federkonstante der mindestens einen federnden Anordnung und somit zur Änderung einer Andruckkraft der mindestens einen Andruckrolle an die mindestens eine Stützwalze aufweist. Die Erfindung betrifft weiterhin die Verwendung einer solchen Vorrichtung.

Unterschiedliche Andruckkräfte von Andruckrollen an einer Stützwalze führen zu einer unterschiedlichen Haftung einer Übertragungslage an der Materialbahn und sollen daher möglichst vermieden werden. Als elastisch federnde Anordnung für derartige Vorrichtungen sind daher bereits Tellerfedern eingesetzt worden, die eine starke Dämpfung aufweisen und bei jedem Federhub eine unterschiedliche Andruckkraft der Andruckrolle an der Stützwalze erzeugen. Eine Reproduzierbarkeit der Andruckkraft einer Andruckrolle an der Stützwalze ist somit mit Tellerfedern nicht erzielbar. Daher wurden elastische Spiralfedern als federnde Anordnung für derartige Vorrichtungen eingesetzt, die bei jedem Federhub eine identische Andruckkraft der Andruckrolle an der Stützwalze erzeugen. Pro Andruckrolle ist jeweils eine Spiralfeder vorgesehen, die nahe der jeweiligen Andruckrolle angeordnet ist und per Hand einzeln justiert werden muss. Dazu ist es erforderlich, die Maschine komplett zu stoppen, in der die Vorrichtung eingesetzt ist.

Der grundsätzliche Aufbau einer dazu geeigneten Maschine ist der DE 32 10 551 A1 zu entnehmen, wobei eine Vorrichtung mit einer beheizten Präge- beziehungsweise Stützwalze und einer Gruppe von Andruckrollenpaaren erkennbar ist. Eine flexible Materialbahn wird hier von einer Vorratsrolle abgezogen und mit einer Prägebeziehungsweise Transferfolie, die aus einer Trägerfolie und der Übertragungslage aufgebaut ist, über Umlenkrollen zusammengeführt und durch einen Spalt zwischen der Stützwalze und den Andruckrollen gefördert. Die Andruckrollen werden über Stellzylinder gegen die Transferfolie, die Materialbahn und die Stützwalze gedrückt, so dass der erforderliche Druck zur Übertragung der Übertragungslage der Transferfolie auf die Materialbahn erzeugt wird. Die Andruckrollen sind dabei derart angeordnet, dass ca. 170° der Stützwalze von Materialbahn und Transferfolie umschlungen werden und ein sogenannter Rollenkorb gebildet wird. Nach Verlassen der Stützwalze wird die bereichsweise oder vollflächig mit der Übertragungslage versehene Materialbahn von der Trägerfolie und gegebenenfalls nicht übertragenen Bereichen der Übertragungslage getrennt. Die Andruckrollenpaare sind auf Wippen gelagert, die ihrerseits jeweils an Winkelhebeln kippbar gelagert sind. Die Winkelhebel sind jeweils um eine zur Drehachse der Stützwalze parallele Achse kippbar.

Dabei entspricht derzeit die Breite der Andruckrollen nicht der gesamten Breite der Stützwalze, sondern es sind für jede zu übertragende Spur einzeln gelagerte Andruckrollenpaare üblich. Um die dabei auftretende Durchbiegung der Träger für die Andruckrollen entlang der Längsachse der Stützwalze auszugleichen, wurde eine federnde Lagerung der Andruckrollen über die Spiralfedern vorgesehen.

Beim Wechsel der Materialbahn und/oder der Transferfolie ist es erforderlich, die Andruckkraft einer jeden Andruckrolle oder eines jeden Andruckrollenpaares an der Stützwalze neu einzustellen. Dazu muss die gesamte Maschine gestoppt und der Rollenkorb unter der Stützwalze hervorgezogen werden. Die Spiralfeder einer jeden einzelnen Andruckrolle wird per Hand eingestellt, die Maschine wieder angefahren und das Ergebnis kontrolliert. Die Optimierung der Andruckkraft der Andruckrollen ist somit äußert zeitaufwendig und nimmt oft Tage in Anspruch. Meist wird die Optimierung daher bereits vor Erreichen des Optimums abgebrochen, um den Zeitaufwand und Materialverbrauch in Grenzen zu halten. Weiterhin hat die Verwendung von Spiralfedern den Nachteil, dass diese korrosionsempfindlich sind und in regelmäßigen Abständen ausgetauscht werden müssen. So wirken sich beispielsweise aus der Materialbahn oder der Transferfolie entweichende Dämpfe negativ auf die Spiralfedern aus. Dies macht in Folge der Wartungsarbeiten eine erneute Optimierung der Andruckkräfte auch ohne eine Änderung an der Materialbahn oder der Transferfolie erforderlich.

Es ist nun Aufgabe der Erfindung, eine verbesserte Vorrichtung bereitzustellen, die eine unkomplizierte und vor allem schnelle Optimierung der Andruckkraft mindestens einer Andruckrolle an einer Stützwalze ermöglicht sowie deren Verwendung anzugeben.

Die Aufgabe wird für die Vorrichtung dadurch gelöst, dass die mindestens eine Andruckrolle pneumatisch oder hydraulisch gefedert gelagert ist, wobei die mindestens eine federnde Anordnung durch eine Membranfeder gebildet ist, und wobei die Membranfeder einen Membranraum, eine den Membranraum in eine Primärseite und eine Sekundärseite trennende Membrane und einen mit der Membrane starr verbundenen Kolben auf der Sekundärseite zur Übertragung der Federkraft auf die mindestens eine Andruckrolle aufweist.

Durch eine Änderung des pneumatischen oder hydraulischen Druckes kann die Andruckkraft der Andruckrollen nun während des Maschinenlaufs in einfacher Weise eingestellt und verändert werden, da die Andruckrollen dazu nicht unter der Stützwalze hervorgezogen werden müssen. Der Austausch der herkömmlichen Andruckrollen durch pneumatisch oder hydraulisch gefederte Andruckrollen ist schnell und einfach vornehmbar. Die Zeitersparnis ist enorm, die beim Anfahren einer neuen Materialbahn und/oder einer neuen Transferfolie erzielbar ist. Auch der Wartungsaufwand reduziert sich bei Verwendung pneumatisch oder hydraulisch gefederter Andruckrollen drastisch. Weiterhin kann die erfindungsgemäße Vorrichtung auch in bereits vorhandenen Maschinen eingesetzt werden, da ungefederte oder über Teller- oder Spiralfedern gefederte Andruckrollen leicht gegen pneumatisch oder hydraulisch gefederte Andruckrollen ausgetauscht werden können.

Membranfedern haben den Vorteil, dass sie wenig Platz benötigen und bereits bei kleinsten Kolbenbewegungen, wie sie bei diesem Einsatzgebiet fast ausschließlich auftreten, ohne Verzögerung arbeiten. Außerdem sind Kolben mit frei wählbarem Querschnitt, beispielsweise rundem oder eckigem Querschnitt, verwendbar. Dies erleichtert den Einsatz einer derartigen Membranfeder auch an Stellen mit geringem oder verwinkeltem Platzangebot.

Um beim Einfedern des Kolbens beziehungsweise der Andruckrolle eine unzulässige Druckerhöhung in der Membranfeder zu vermeiden, wird bei der pneumatischen Federung vorzugsweise entweder ein Luftpolster auf der Primärseite vorgesehen oder ein Druckregler mit sekundärseitiger Entlastung verwendet. In einem hydraulischen System wird vorzugsweise entweder ein federbelasteter Speicher oder ein Druckregler mit sekundärseitiger Entlastung eingesetzt.

Serienmäßige Pneumatik- oder Hydraulikzylinder weisen einen sehr viel höheren Platzbedarf auf als eine Membranfeder, so dass ihr Einsatz vor allem durch das üblicherweise nur knappe Platzangebot in den bekannten Maschinen begrenzt ist. Generell sind bei der vorliegenden Vorrichtung über Membranfedern abhängig von der eingesetzten Membrane Federwege im Bereich von 3 bis 4 mm erzielbar, wobei jedoch bereits ein Membranhub von 0,1 bis 0,2 mm im vorliegenden Anwendungsbereich meist völlig ausreichend ist. Die Größe der verwendeten Membrane kann auf das vorhandene Platzangebot optimal abgestimmt werden.

Es hat sich bewährt, wenn die mindestens eine Einstelleinrichtung zur Änderung der Federkonstante der federnden Anordnung mindestens eine Steuereinheit zur Einstellung der Federkonstante über mindestens ein Regelventil, vorzugsweise ein elektrisch einstellbares Proportionaldruckregelventil, und mindestens eine Versorgungsleitung umfasst, wobei mindestens eine der Versorgungsleitungen mit der mindestens einen federnden Anordnung zu deren Versorgung mit einem Stellmedium, das durch Druckluft oder eine Hydraulikflüssigkeit gebildet ist, verbunden ist. Die Steuereinheit ist dabei fern von der erfindungsgemäßen Vorrichtung beziehungsweise von der Maschine mit der erfindungsgemäßen Vorrichtung platzierbar, wobei die Versorgungsleitungen die permanente Versorgung der federnden Anordnungen mit dem Stellmedium gewährleisten. Somit ist es ein besonderer Vorteil der erfindungsgemäßen Vorrichtung, dass die mindestens eine federnde Anordnung durch die mindestens eine Steuereinheit fernsteuerbar ist. Selbstverständlich kann das Regelventil aber auch direkt manuell betätigt werden, so dass auf eine gesonderte Steuereinheit verzichtet werden kann. Gegebenenfalls kann zur Steigerung des zur Verfügung stehenden Drucks des Stellmediums ein Druckverstärker eingesetzt werden. Dies ist insbesondere bei einer pneumatischen Federung bevorzugt.

Besonders bevorzugt ist es, wenn die Steuereinheit zur Verarbeitung digitaler Vorgabewerte geeignet ist. Dies ermöglicht die Eingabe beziehungsweise Hinterlegung von bereits bekannten Einzelparametern als Softwareprogramm für bekannte Kombinationen von Materialbahnen und Transferfolien, so dass ein Testlauf zur Einstellung der Andruckkräfte der Andruckrollen vollständig entfallen kann.

Es ist zudem bevorzugt, wenn die Membranfeder auf der Sekundärseite eine Dichtungsanordnung aufweist, die die Membranfeder vor eindringenden Stäuben und korrosiven Medien schützt. Insbesondere hat es sich dabei bewährt, wenn die Dichtungsanordnung aus einer, vorzugsweise elastischen Dichtung und einem Dichtungsdeckel gebildet ist, wobei der Kolben an seiner der Membrane abgewandten Seite beziehungsweise fest damit verbundene Teile durch die Dichtung geführt ist/sind. Stäube im Bereich des Kolbens im Membranraum oder eine Korrosion des Kolbens oder der Innenwandung des Membranraums können beispielsweise zu einer Blockierung der Kolbenbewegung führen, die ein reproduzierbares Einstellen von Andruckkräften verhindert und einen Austausch der Membranfeder erforderlich macht.

Im Hinblick auf eventuell erforderliche Wartungsarbeiten hat es sich bewährt, wenn die mindestens eine Andruckrolle und somit auch die mindestens eine federnde Anordnung auf mindestens einem Schlitten angeordnet ist, der in Richtung der Längsachse der mindestens einen Stützwalze beweglich ist. Besonders bevorzugt ist es dabei, wenn der mindestens eine Schlitten mindestens um die Länge der mindestens einen Stützwalze in Richtung der Längsachse der mindestens einen Stützwalze beweglich ist, so dass die mindestens eine Andruckrolle und die zugehörige federnde Anordnung vollständig unter der Stützwalze hervorgezogen werden kann. Dies kann beispielsweise erforderlich sein, wenn Andruckrollen ausgewechselt oder gereinigt werden müssen. Es hat sich bewährt, wenn beim Bewegen des Schlittens aus seiner Arbeitsposition heraus die Versorgungsleitungen für das Stellmedium automatisch über Kupplungen getrennt und beim Zurückschieben des Schlittens in die Arbeitsposition automatisch wieder verbunden werden. Bei hydraulischen Systemen müssen dabei leckagefreie Kupplungen verwendet werden.

Es ist bevorzugt, wenn die mindestens eine Andruckrollenwelle der Andruckrolle in einer Lageranordnung montiert ist, die senkrecht zur Längsachse der Andruckrollenwelle gesehen einen im wesentlichen U-förmigen Querschnitt aufweist. Dies ermöglicht es, die Aufhängung einer Andruckrolle äußerst platzsparend auszuführen.

Weiterhin hat es sich bewährt, wenn die Lageranordnung über eine Lageranordnungswelle mit einer Grundplatte verbunden ist, wobei die Lageranordnungswelle parallel zur Andruckrollenwelle angeordnet ist. Die Fixierung der Lageranordnungswelle an der Grundplatte erfolgt analog zur Befestigung der Andruckrollenwelle an der Lageranordnung vorzugsweise mittels Gewindestiften. Die Lageranordnung ist somit um die Lageranordnungswelle drehbar, so dass die Position der Andruckrolle über eine Veränderung der Position der Lageranordnung einstellbar ist.

Es hat sich bewährt, wenn die Lageranordnung einen Wegaufnehmer aufweist, der lose derart auf dem,Kolben der Membranfeder beziehungsweise damit fest verbundenen Teilen aufliegt, dass die Andruckrollenwelle bei Änderung der Position des Kolbens auf einer Kreisbahn um die Lageranordnungswelle bewegt wird.
Es ist weiterhin praktikabel, wenn die Lageranordnung mit dem Kolben gelenkig derart verbunden ist, dass die Andruckrollenwelle bei Änderung der Position des Kolbens auf einer Kreisbahn um die Lageranordnungswelle bewegt.
Eine Auslenkung der Membrane der Membranfeder führt zu einer Bewegung des Kolbens im Membranraum und somit zu einer Auslenkung des Wegaufnehmers, die zu einer Auslenkung der Lageranordnung und somit der Andruckrolle führt.

Es ist bevorzugt, wenn ein Abstandshalter an der Lageranordnung und/oder an der Grundplatte angeordnet ist, der einen direkten Kontakt zwischen der Lageranordnung und der Grundplatte verhindert. Der Abstandshalter dient als Anschlag zum Schutz der Membranfeder.

Es ist bevorzugt, wenn mindestens zwei Andruckrollen parallel zueinander entlang der Längsachse der mindestens einen Stützwalze angeordnet sind. Jede der parallelen Andruckrollen überträgt dabei eine Spur einer Übertragungslage einer Transferfolie auf eine Materialbahn. Somit kann die Breite der Stützwalze mehrfach zur Übertragung einer oder unterschiedlicher Übertragungslagen, die auf einer oder mehreren Transferfolien angeordnet sein können, genutzt werden.

Mit der erfindungsgemäßen Vorrichtung ist es in einfacher Weise möglich, die federnden Anordnungen der mindestens zwei parallelen Andruckrollen an jeweils eine gesonderte Versorgungsleitung für das Stellmedium anzuschließen, so dass unterschiedliche Andruckkräfte erzeugt werden können. Dies ist beispielsweise insbesondere dann wünschenswert, wenn unterschiedliche Spurbreiten einer Übertragungslage nebeneinander auf einer Materialbahn erzeugt werden sollen.

Es hat sich aber auch bewährt, wenn die federnden Anordnungen der mindestens zwei parallelen Andruckrollen an eine gemeinsame Versorgungsleitung für das Stellmedium angeschlossen sind. Dies bietet sich insbesondere dann an, wenn nebeneinander identische Spuren von der Transferfolie auf die Materialbahn übertragen werden sollen.

Um die Wartungsarbeiten an den parallelen Andruckrollen zu erleichtern hat es sich als vorteilhaft erwiesen, wenn die mindestens zwei parallelen Andruckrollen gemeinsam auf einem ersten Schlitten angeordnet sind, der unter der Stützwalze hervorgezogen werden kann.

Weiterhin hat es sich bewährt, wenn mindestens zwei Andruckrollen in Reihe entlang eines Stützwalzendurchmessers angeordnet sind, so dass ein Rollenkorb gebildet wird. Dies verbessert das Übertragungsergebnis und die Haftung der Übertragungslage an der Materialbahn deutlich.

Vorzugsweise sind die federnden Anordnungen der mindestens zwei in Reihe angeordneten Andruckrollen dabei an jeweils eine gesonderte Versorgungsleitung für das Stellmedium angeschlossen. So ist die Andruckkraft von aufeinanderfolgenden Andruckrollen, die nacheinander die gleiche Spur der Übertragungslage gegen die Stützwalze drücken, unterschiedlich einstellbar. Besonders bevorzugt ist es dabei, wenn die Andruckkraft der in Reihe angeordneten Andruckrollen von Andruckrolle zu Andruckrolle erhöht wird. Dies ergibt ein einwandfreies Übertragungsergebnis und eine besonders gute Haftung der übertragenen Spur der Übertragungslage auf der Materialbahn.

Besonders bevorzugt ist es, wenn auf der Grundplatte zwei Andruckrollen in Reihe entlang eines Stützwalzendurchmessers als Andruckrollenpaar angeordnet sind. Dabei folgen die Andruckrollen dieses Rollenpaares in kurzem Abstand nacheinander und verbessern die Haftung der Übertragungslage an der Materialbahn zusätzlich. Dabei ist das Andruckrollenpaar auf einem Schlitten angeordnet, über welchen es in Richtung der Längsachse der Stützwalze bewegt werden kann.

Dabei hat es sich bewährt, wenn die mindestens eine federnde Anordnung der zwei in Reihe angeordneten Andruckrollen in die Grundplatte integriert ist.
Dabei sind sowohl Anordnungen geeignet, bei denen für die zwei Andruckrollen eine gemeinsame federnde Anordnung vorgesehen ist als auch solche, bei denen für die zwei Andruckrollen jeweils gesonderte federnde Anordnungen vorgesehen sind.

Vorzugsweise wird die mindestens eine Stützwalze beheizt, um die Übertragungslage optimal auf die Materialbahn zu übertragen und die Zeitspanne, die zur einwandfreien Übertragung der Übertragungslage auf die Materialbahn erforderlich ist, möglichst abzukürzen. Durch die Wärme kann eine an der Übertragungslage vorgesehene Haftschicht aufgeschmolzen und eine haftfeste Verbindung zwischen der Materialbahn und der Übertragungslage hergestellt werden. Die Umschlingung der beheizten Stützwalze mit einem Rollenkorb erzeugt eine Verlängerung der Kontaktstrecke und damit der Kontaktzeit zwischen den Bahnen und der Stützwalze, so dass eine einwandfreie Übertragung der Übertragungslage auf die Materialbahn auch bei hoher Geschwindigkeit der Bahnen möglich ist.

Eine Verwendung der erfindungsgemäßen Vorrichtung zur mindestens bereichsweisen Übertragung einer Übertragungslage einer Prägefolie auf ein zu beprägendes Material, vorzugsweise zur Bildung von Sicherheitselementen auf Wertdokumenten wie Ausweisen, Karten oder Banknoten, von Bauelementen oder dekorativen Elementen, insbesondere in der Architektur oder anderen technischen Bereichen, von Verpackungsmaterialien, insbesondere in der pharmazeutischen oder Lebensmittelindustrie oder von Bauteilen in der Elektro- oder Elektronikindustrie, ist ideal.

Die Figuren 1 bis 10 sollen die erfindungsgemäße Vorrichtung beispielhaft erläutern. So zeigt:
- Figur 1: eine Vorrichtung in Richtung der Längsachse einer Stützwalze gesehen,
- Figur 2: die Vorrichtung aus Figur 1 senkrecht zur Längsachse der Stützwalze gesehen.
- Figur 3: den ersten Schlitten aus Figur 1 im Detail in einer Schnittdarstellung,
- Figur 4: den ersten Schlitten aus Figur 3 in einer vergrößerten Darstellung
- Figur 5: eine vergrößerte Darstellung der Figur 1 im Bereich einer Andruckrolle,
- Figur 6: eine vergrößerte Darstellung der Figur 2 im Bereich einer Andruckrolle,
- Figur 7: eine Schnittdarstellung im Bereich einer Andruckrolle aus Figur 6,
- Figur 8: eine Draufsicht auf die Grundplatte aus Figur 4,
- Figur 9: ein Diagramm zur Abhängigkeit zwischen Druck des Stellmittels und der Andruckkraft pneumatisch gefederten Andruckrollen gemäß den Figuren 1 bis 7, und
- Figur 10: die Maschine gemäß der DE 32 10 551 A1 zur Verdeutlichung des Funktionsprinzips einer Anlage, in der die erfindungsgemäße Vorrichtung vorzugsweise eingesetzt wird.

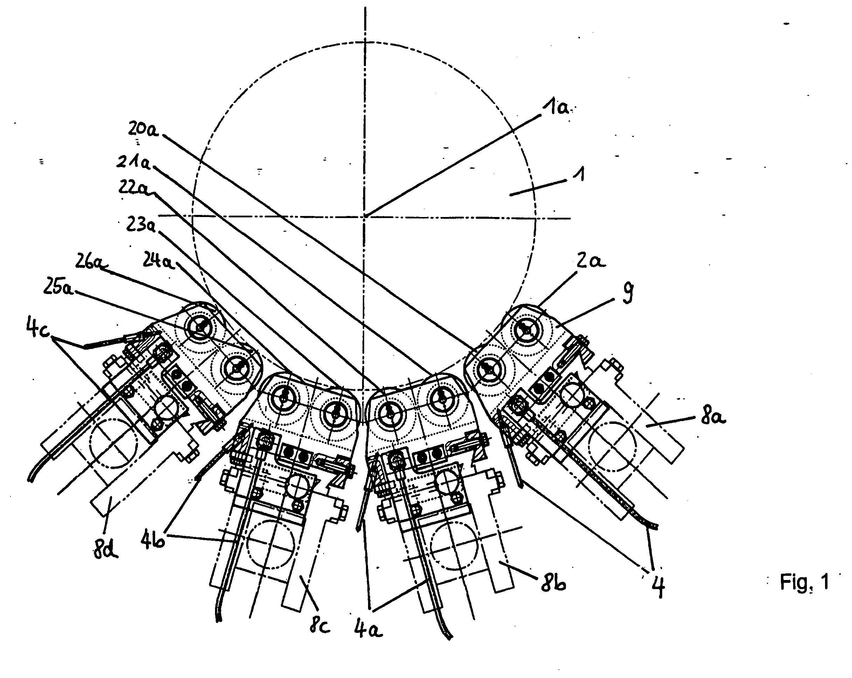

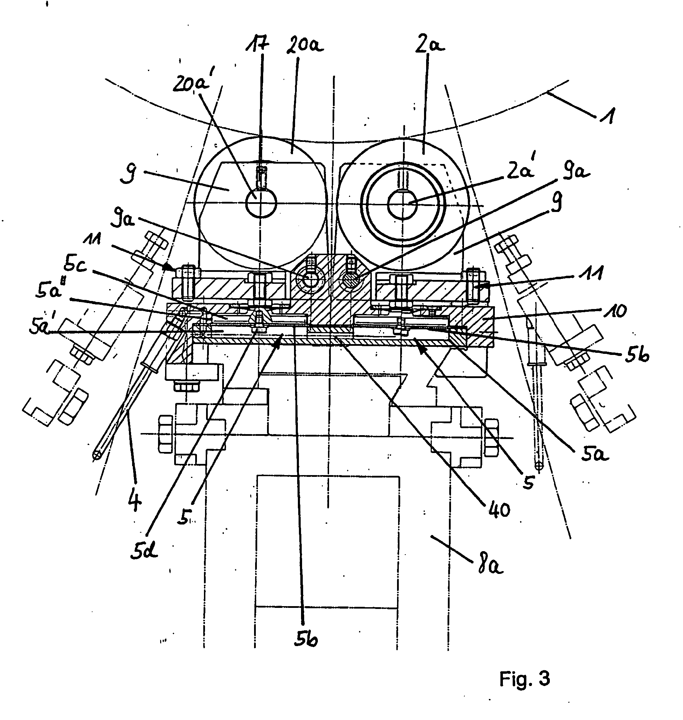

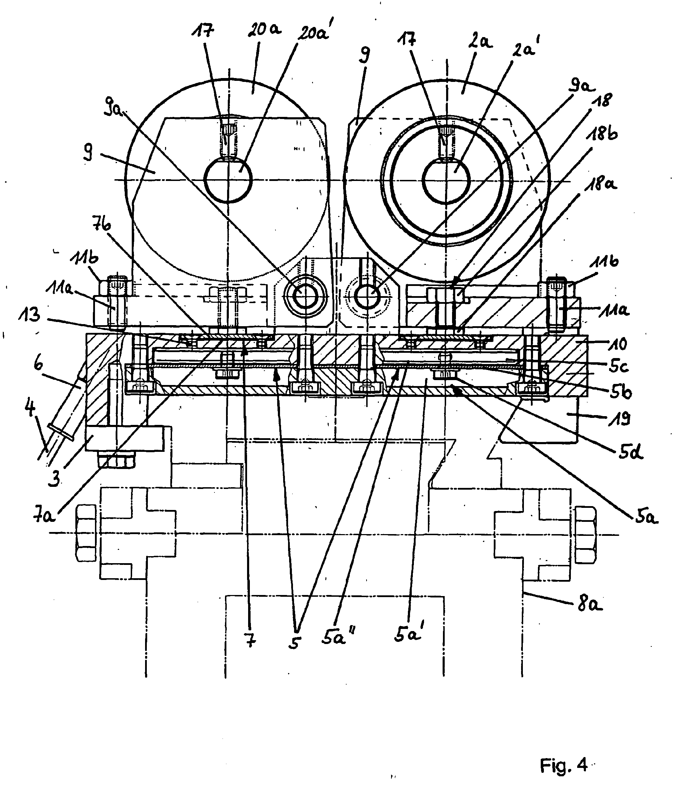

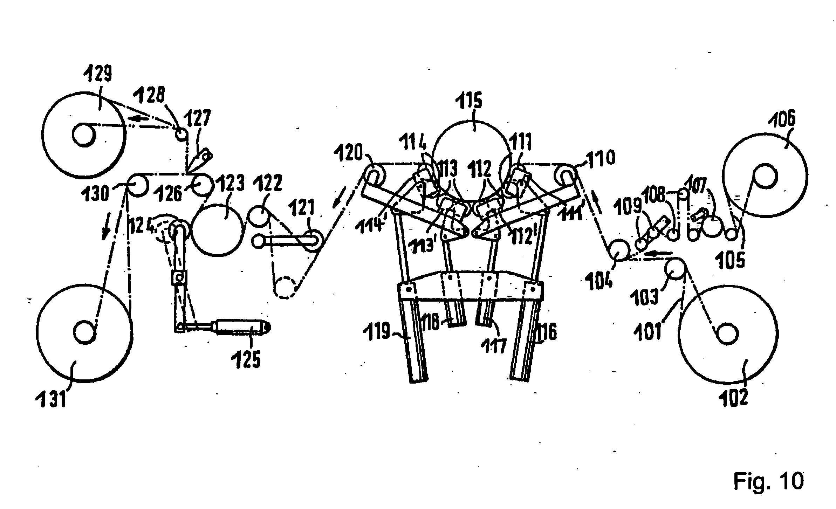

Figur 1 zeigt eine Vorrichtung in Richtung der Längsachse 1 a einer beheizten Stützwalze 1 gesehen. Es sind vier Schlitten 8a, 8b, 8c, 8d zu erkennen, die mit einen Rollenkorb bildenden Andruckrollen 2a, 20a, 21a, 22a, 23a, 24a, 25a, 26a versehen sind, die nacheinander gegen den Durchmesser der Stützwalze 1 drücken. Dabei sind die Andruckrollen 2a, 20a als Andruckrollenpaar auf dem ersten Schlitten 8a, die Andruckrollen 21 a, 22a als Andruckrollenpaar auf dem Schlitten 8b, die Andruckrollen 23a, 24a als Andruckrollenpaar auf dem Schlitten 8c und die Andruckrollen 25a, 26a als Andruckrollenpaar auf dem Schlitten 8d angeordnet. Die Andruckrollen sind dabei in Lageranordnungen 9 montiert und vorzugsweise aus Phenolharzpressmasse oder ähnlichem Material gebildet. Eine nicht dargestellte Transferfolie und eine nicht dargestellte Materialbahn werden zur Übertragung einer Übertragungslage der Transferfolie auf die Materialbahn zwischen der Stützwalze 1 und den Andruckrollen 2a, 20a, 21 a, 22a, 23a, 24a, 25a, 26a hindurch geführt, wobei die Materialbahn und die Transferfolie mittels der Andruckrollen 2a, 20a, 21a, 22a, 23a, 24a, 25a, 26a an die beheizte Stützwalze 1 gedrückt werden. Zum Grundprinzip siehe Figur 10, die der DE 32 10 551 A1 entnommen ist. Die Andruckrollen 2a, 20a, 21a, 22a, 23a, 24a, 25a, 26a sind mittels einer federnden Anordnung (siehe Membranfeder 5 in Figur 3 oder 4) pneumatisch federnd gelagert. Eine hier nicht gezeigte Einstelleinrichtung zur Änderung einer Federkonstante der federnden Anordnungen der Andruckrollen 2a, 20a, 21 a, 22a, 23a, 24a, 25a, 26a ermöglicht die Einstellung deren Andruckkraft an die Stützwalze 1.
Dabei sind Versorgungsleitungen 4, 4a, 4b, 4c mit den federnden Anordnungen verbunden, die Druckluft als Stellmedium bereitstellen.

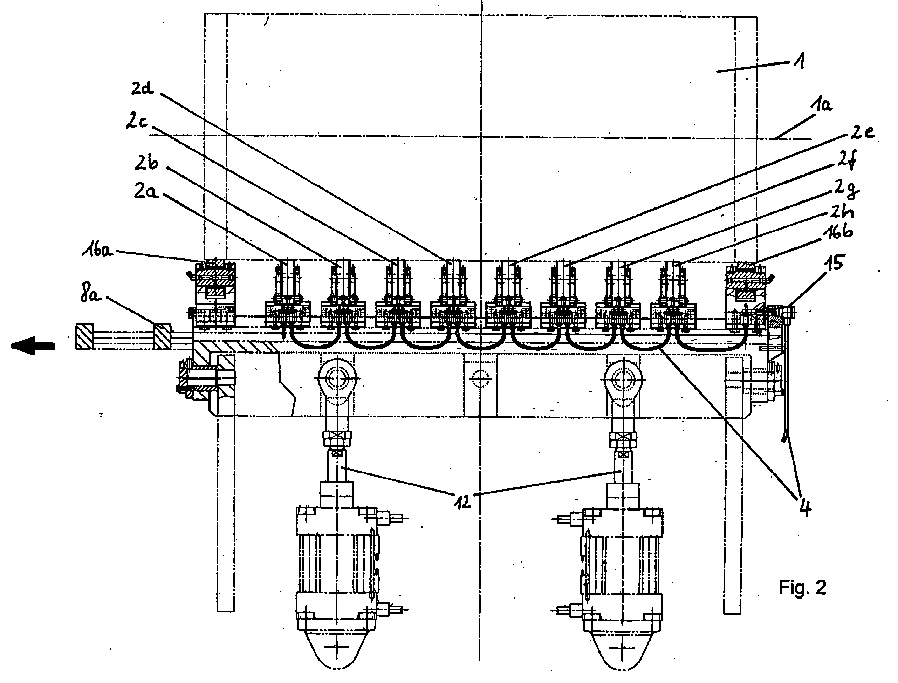

Figur 2 zeigt die Vorrichtung aus Figur 1 senkrecht zur Längsachse der beheizten Stützwalze 1 gesehen mit Blick auf den ersten Schlitten 8a. Es ist zu erkennen, dass entlang der Stützwalze 1 insgesamt acht Andruckrollen 2a, 2b, 2c, 2d, 2e, 2f, 2g, 2h nebeneinander angeordnet sind, die eine zwischen der Stützwalze 1 und den Andruckrollen 2a, 2b, 2c, 2d, 2e, 2f, 2g, 2h hindurch geführte, nicht dargestellte Transferfolie gegen eine ebenfalls hindurch geführte, nicht dargestellte Materialbahn sowie gegen die Stützwalze 1 drücken. Die Übertragung einer Übertragungslage einer Transferfolie auf eine Materialbahn erfolgt in diesem Fall in Form von acht Bahnen, deren Breite der Breite einer Andruckrolle 2a, 2b, 2c, 2d, 2e, 2f, 2g, 2h entspricht. Eine Bahn, die beispielsweise zwischen der Andruckrolle 2a und der Stützwalze 1 hindurchläuft, gelangt nachfolgend an sieben weitere Andruckrollen 20a, 21 a, 22a, 23a, 24a, 25a, 26a entlang der Stützwalze 1. Insgesamt ist der hier dargestellte Rollenkorb (siehe Figur 1) demnach mit 64 Andruckrollen bestückt. Der Schlitten 8a ist mit zwei Andruckzylindern 12 verbunden, die in der Lage sind, den Schlitten 8a inklusive der Andruckrollen 2a, 2b, 2c, 2d, 2e, 2f, 2g, 2h in Richtung der Stützwalze 1 oder davon weg zu transportieren. Die Verbindung zwischen den Andruckzylindern 12 und dem Schlitten 8a ist lösbar, so dass der Schlitten 8a in Richtung der Längsachse 1 a der Stützwalze 1 in Pfeilrichtung bewegt werden kann, wenn die Andruckrollen 2a, 2b, 2c, 2d, 2e, 2f, 2g, 2h auf dem Schlitten 8a mittels der Andruckzylinder 12 von der Stützwalze 1 wegbewegt wurden. Der Schlitten 8a kann in Pfeilrichtung komplett unter der Stützrolle 1 hervorgezogen werden, so dass ein Austausch und eine Wartung des Schlittens 8a und aller darauf angeordneten Teile in einfacher Weise möglich ist. Die federnden Anordnungen der Andruckrollen 2a, 2b, 2c, 2d, 2e, 2f, 2g, 2h auf dem Schlitten 8a sind mit einer Versorgungsleitung 4 verbunden, die diese mit Druckluft versorgt. Dabei ist eine Kupplung 15 vorgesehen, die die Versorgungsleitung 4 beim Herausziehen des Schlittens 8a in Pfeilrichtung automatisch trennt und abdichtet. Beim Zurückschieben des Schlittens 8a unter die Stützwalze 1 wird die Verbindung über die Kupplung 15 automatisch wieder hergestellt. Weiterhin sind auf dem Schlitten 8a seitlich jeweils ortsfeste Stützrollen 16a, 16b für die Stützwalze 1 angeordnet, die erst nach den Andruckrollen 2a, 2b, 2c, 2d, 2e, 2f, 2g, 2h auf die Stützwalze 1 aufsetzen und somit einerseits die Einstellung der Andruckkraft der Andruckrollen 2a, 2b, 2c, 2d, 2e, 2f, 2g, 2h an die Stützwalze 1 ermöglichen und andererseits eine Überlastung der Andruckrollen 2a, 2b, 2c, 2d, 2e, 2f, 2g, 2h beziehungsweise der Membranfedern 5 verhindern. Die Stützrollen 16a, 16b dienen als Anschlag der Andruckrollen 2a, 2b, 2c, 2d, 2e, 2f, 2g, 2h an der Stützwalze 1 und definieren somit die Endstellung der Andruckrollen 2a, 2b, 2c, 2d, 2e, 2f, 2g, 2h.

Figur 3 zeigt den ersten Schlitten 8a aus Figur 1 im Detail in einer Schnittdarstellung. Dabei ist die Position der Stützwalze 1 im Hinblick auf die Andruckrollen 2a, 20a zu erkennen. Die Andruckrolle 2a ist mittels einer Andruckrollenwelle 2a', die parallel zur Längsachse 1a der Stützwalze 1 angeordnet ist, in der Lageranordnung 9 gehalten. Die Andruckrollenwelle 2a' ist über Gewindestifte 17 gesichert. Die Lageranordnung 9 ist über eine Lageranordnungswelle 9a gelenkig mit der Grundplatte 10 verbunden. Ein Anschlag 11, gebildet aus einem Gewindebolzen 11a und einer Sicherungsmutter 11 b (siehe Figur 4) verhindert einen direkten Kontakt zwischen der Lageranordnung 9 und der Grundplatte 10 und schützt die Membranfeder 5 vor Überlastung. Die Membranfeder 5 weist einen Membranraum 5a und eine Membrane 5b auf, die den Membranraum 5a in eine Primärseite 5a' und eine Sekundärseite 5a" teilt. Auf der Sekundärseite 5a" befindet sich ein Kolben 5c, der über eine Schraube 5d fest mit der Membrane 5b verbunden ist. Ein Verbindungskanal 40 stellt hier eine Verbindung zwischen den beiden Membranräumen 5a her, so dass in beiden Membranräumen 5a der gleiche Druck herrscht.

Figur 4 zeigt den ersten Schlitten 8a aus Figur 3 in einer vergrößerten Darstellung, wobei die beiden Andruckrollen 2a, 20a und die Andruckrollenwellen 2a', 20a'zu erkennen sind. Die Grundplatte 10 ist mit dem Schlitten 8a über eine Spannpratze 19 und einen Deckel 3 verbunden. Die Versorgungsleitung 4 versorgt die beiden vorhandenen, gleich ausgebildeten Membranfedern, die jeweils die Position der darüber angeordneten Andruckrollen 2a, 20a bestimmen, mit dem gleichen pneumatischen Druck und ist über eine Verschraubung 6 befestigt. Die Membrane 5b im Membranraum 5a ist mit dem Kolben 5c über die Schraube 5d verbunden. Der Membranraum 5a ist mittels einer Dichtungsanordnung 7, die durch eine elastische Dichtung 7a und einen mittels Schrauben 13 an der Grundplatte 10 befestigten Dichtungsdeckel 7b gebildet ist, vor Staub und Dämpfen geschützt. Die Lageranordnung 9 weist einen Wegaufnehmer 18 auf, der durch eine Stellschraube 18a und eine Sicherungsmutter 18b gebildet ist und durch den Kolben 5c bewegt wird. Dabei wirkt der Kolben 5c direkt auf den Wegaufnehmer 18 ein. Die Dichtung 7a ist an einer Nut in der Schraube 5d, die fest mit dem Kolben 5c verbunden und damit dem Kolben 5c zuzurechnen ist, eingeknöpft (auch aus Figur 3, linke Seite, zu ersehen). Bei einer Änderung des Druckes der Druckluft auf der Primärseite 5a' der Membranfeder 5 wird die Membran 5b ausgelenkt und der Kolben 5c bewegt. Dadurch verändert sich die Position des Wegaufnehmers 18 und der damit fest verbundenen Lageranordnung 9, so dass die Position der senkrecht über dem Wegaufnehmer 18 angeordneten Andrückrollenwelle 2a, 20a und damit die Andruckkraft der Andruckrollen 2a, 20a gegenüber der Stützwalze 1 verändert wird. Entgegen der hier gezeigten Anordnung des jeweiligen Kolbens 5c und des Wegaufnehmers 18 senkrecht zur Andruckrollenwelle 2a', 20a' ist es selbstverständlich auch möglich, den Kolben 5c und den Wegaufnehmer 18 in Richtung des Anschlags 11 verschoben anzuordnen oder den Kolben 5c mit der Lageranordnung 9 gelenkig zu verbinden, so dass die Kraftübertragung nicht senkrecht unterhalb der Andruckrollenwelle 2a', 20a' erfolgt. Dadurch sind größere Auslenkungen erzielbar. Im hier gezeigten Ausführungsbeispiel ist eine gemeinsame Versorgungsleitung 4 für beide Membranfedern 5 vorgesehen, so dass die Position der Andruckrollen 2a, 20a nur jeweils um den gleichen Wert verändert werden kann, jedoch nicht um unterschiedliche Werte. Dies ist bei einer getrennten Versorgung der beiden Membranfedern 5 mit Druckluft über zwei separate Versorgungsleitungen 4 allerdings in einfacher Weise realisierbar, wobei am Schlitten 8a jedoch mehrere Kupplungen 15 angeordnet werden müssen.

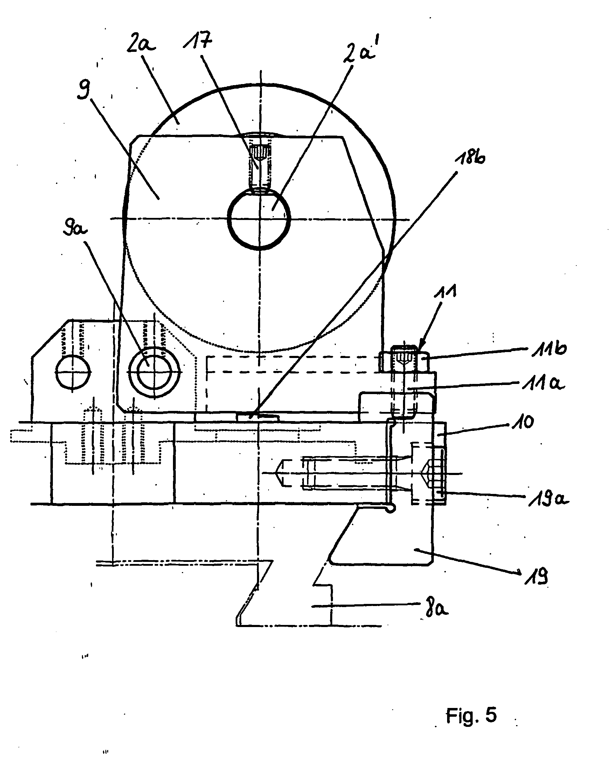

Figur 5 zeigt eine vergrößerte Darstellung der Figur 1 im Bereich der Andruckrolle 2a, wobei die bereits oben beschriebene Andruckrollenwelle 2a' und die Gewindestifte 17 zu deren Befestigung an der Lageranordnung 9 zu erkennen sind. Weiterhin ist die Lageranordnungswelle 9a, über welche die Lageranordnung 9 gelenkig mit der Grundplatte 10 verbunden ist sowie der Anschlag 11 bestehend aus dem Gewindebolzen 11 a und der Sicherungsmutter 11 b gezeigt. Die Spannpratze 19 verbindet die Grundplatte 10 mit dem Schlitten 8a und ist mittels der Schraube 19a mit der Grundplatte 10 verschraubt.

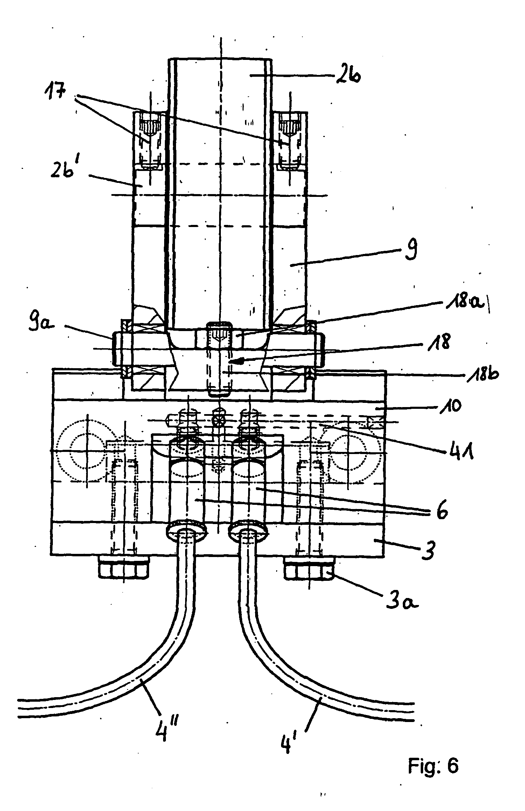

Figur 6 zeigt eine vergrößerte Darstellung der Figur 2 im Bereich der Andruckrolle 2b, wobei die Andruckrollenwelle 2b', die über die Gewindestifte 17 mit der im wesentlichen U-förmigen Lageranordnung 9 verbunden ist, dargestellt ist. Weiterhin ist die Lageranordnungswelle 9a, über welche die Lageranordnung 9 gelenkig mit der Grundplatte 10 verbunden ist, und der Wegaufnehmer 18 zu erkennen. Die Versorgungsleitung 4' ist gemäß Figur 2 zu den federnden Anordnungen im Bereich der benachbarten Andruckrolle 2c geleitet, während die Versorgungsleitung 4" zu den federnden Anordnungen der Andruckrollen 2a, 20a führt. Dabei sind die Versorgungsleitungen 4', 4" mit der Grundplatte 10 über die Verschraubung 6 verbunden. Innerhalb der Grundplatte 10 ist eine Verbindung zwischen den Versorgungsleitungen 4', 4" über einen Kanal 41 und weiterhin eine Verbindung mit den beiden Membranräumen 5a vorgesehen. Der Deckel 3 und die Schrauben 3a zur Befestigung des Deckels 3 sind erkennbar.

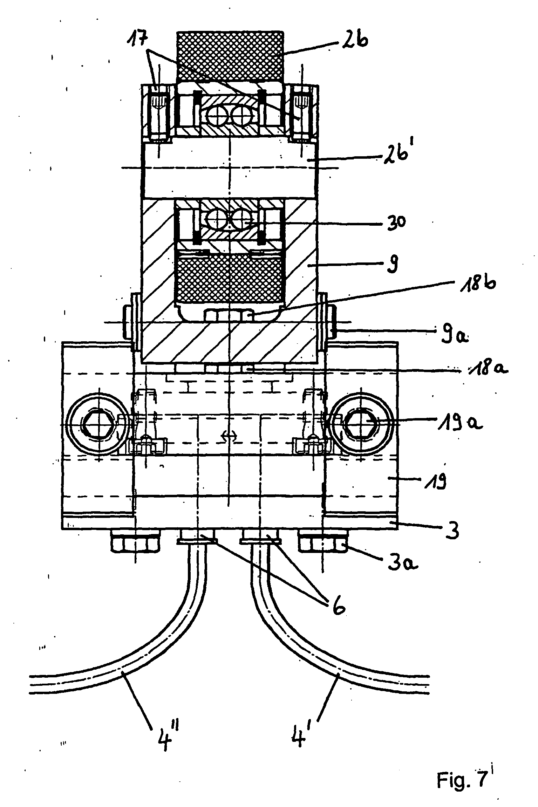

Figur 7 zeigt eine Schnittdarstellung im Bereich der Andruckrolle 2b aus Figur 6. Dabei ist ein Pendelkugellager 30 zwischen der Andruckrollenwelle 2b' und der Andruckrolle 2b erkennbar. Kugellager haben sich für diesen Einsatzzweck als besonders geeignet erwiesen.

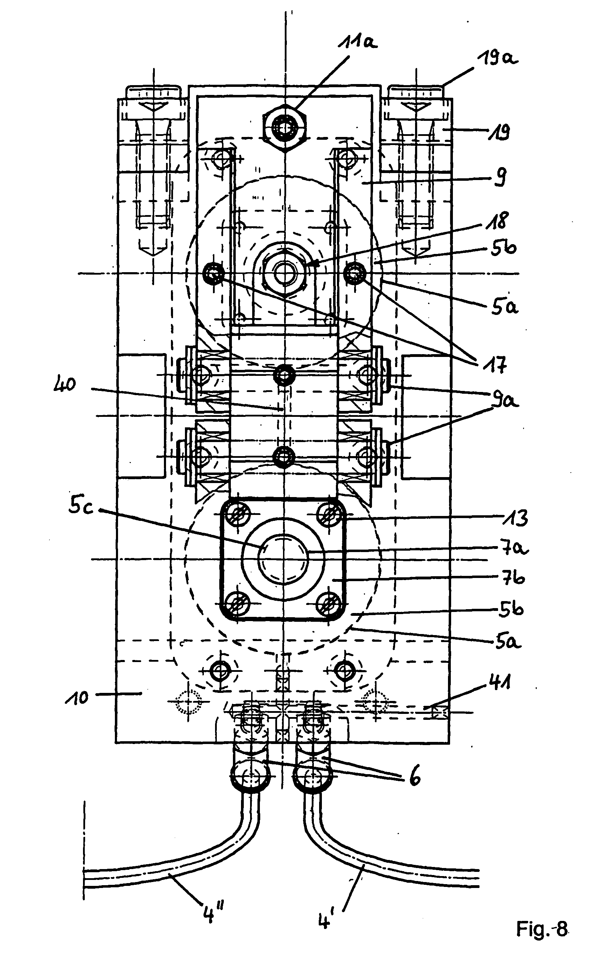

Figur 8 zeigt eine Draufsicht auf die Grundplatte 10 aus Figur 4, wobei im oberen Bereich die Andruckrolle 2a und die Andruckrollenwelle 2a' und im unteren Bereich die Andruckrolle 20a, die Andruckrollenwelle 20a' sowie die Lageranordnung 9 weggelassen wurde. Die Gewindestifte 17, die zur Fixierung der Andruckrollenwelle 2a' in der Lageranordnung 9 eingesetzt werden, sind erkennbar. Weiterhin sind die Positionen des Wegaufnehmers 18 und des Abstandshalters 11 an der Lageranordnung 9 ersichtlich. Die Position der Membrane 5b im Membranraum 5a ist über gestrichelte Linien angedeutet, wobei der Umfang der Membrane 5b einen Kreis beschreibt. Zwischen den Membranräumen 5a verläuft der Verbindungskanal 40, der den Druck des Stellmediums von einem zum anderen Membranraum 5a weitergibt. Ohne die Lageranordnung 9 ist weiterhin die Dichtungsanordnung 7 erkennbar, die sich aus dem Dichtungsdeckel 7b, welcher mit Schrauben 13 an der Grundplatte 10 befestigt ist, und der Dichtung 7a zusammensetzt.

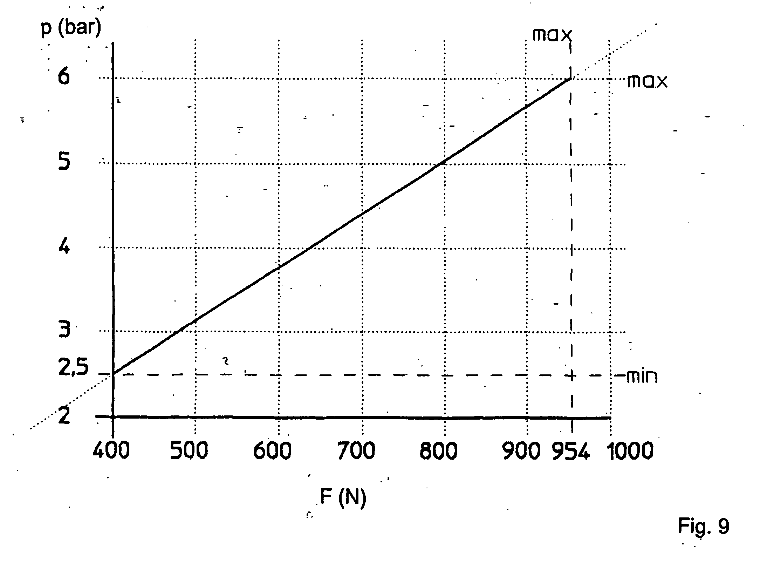

Figur 9 zeigt ein Diagramm zur Abhängigkeit zwischen dem Druck des Stellmittels, hier Druckluft, und der Andruckkraft pneumatisch gefederten Andruckrollen (2a, 2b, 2c, 2d, 2e, 2f, 2g, 2h, 20a, 21 a, 22a, 23a, 24a, 25a, 26a) gemäß den Figuren 1 bis 7 gegenüber der Stützwalze 1. Der Druck p (in bar) der Druckluft ist über der Andruckkraft F (in Newton) einer Andruckrolle an der Stützwalze aufgetragen. Um die Membranfeder 5 zu betätigen, werden hier Drücke im Bereich von minimal 2,5 bar bis maximal 6 bar eingesetzt., wobei Andruckkräfte im Bereich von 400 bis 954N erzeugt werden.

Figur 10 zeigt die Maschine gemäß der DE 32 10 551 A1 zur Verdeutlichung des Funktionsprinzips einer Anlage, in der die erfindungsgemäße Vorrichtung vorzugsweise eingesetzt wird. Eine zu beprägende Materialbahn 101 wird auf einer gebremsten Vorratsrolle 102 bereitgestellt und über Umlenkrollen 103, 104 mit einer Prägefolienbahn 105 zusammengeführte Die Prägefolienbahn 105 wird auf einer weiteren Vorratsrolle 106 bereitgestellt und über die Bremsrolle 107 und die Umlenkrollen 108, 109 mit der zu beprägenden Materialbahn 101 zusammengeführt. Die Prägefolienbahn 105 und die zu beprägende Materialbahn 101 werden nun gemeinsam über eine Umlenkrolle 110 in einen Spalt zwischen einer Prägewalze 115 und Andruckrollenpaaren 111, 112, 113, 114 geführt. In diesem Anlagenabschnitt wird die erfindungsgemäße Vorrichtung mit pneumatisch oder hydraulisch gefederten Andruckrollen bevorzugt eingesetzt. Die Andruckrollenpaare 111, 112, 113, 114 sind jeweils einzeln auf Wippen 111', 112', 113', 114' gelagert und werden über Zylinder 116, 117, 118, 119 gegen die Prägewalze 115 gedrückt, wobei in Breite der Andruckrollen eine Spur der Übertragungslage der Prägefolienbahn 105 auf die zu beprägende Materialbahn 101 überträgt. Nach Verlassen des Spalts werden die Bahnen über diverse Umlenkrollen 120, 122, 126 und eine Tänzerwalze 121 zur Regelung der Bahnspannung geführt. An einer Kante 127 wird die mit der Spur beprägte Materialbahn 101 von den nicht übertragenen Bereichen der Übertragungslage der Prägefolienbahn 105 beziehungsweise von der Trägerfolie der Prägefolienbahn 105 getrennt. Es erfolgt eine Aufwicklung der beprägten Materialbahn auf der Aufwickelrolle 131 und eine Aufwicklung der verbrauchten Prägefolienbahn auf der Aufwickelrolle 129.

Es sei hinzugefügt, dass sich dem Fachmann in Kenntnis der Erfindung eine Vielzahl von Möglichkeiten erschließen, die erfindungsgemäße Vorrichtung auszuführen, wobei diverse in den Figuren gezeigte Teile in anderer Form gestaltet oder weggelassen werden können. So könnten beispielsweise die Andruckzylinder gemäß Figur 2 weggelassen werden und anstelle der Bewegung der Schlitten senkrecht zur Längsachse der Stützwalze eine Bewegung der Stützwalze senkrecht zur Längsachse der Stützwalze von den Schlitten weg erfolgen.

## Patentansprüche

1. Vorrichtung zum Anbringen mindestens eines Flächenabschnitts einer Übertragungslage einer Transferfolie auf einer Materialbahn, wobei die Vorrichtung mindestens eine Stützwalze (1) und mindestens eine Andruckrolle (2a, 2b, 2c, 2d, 2e, 2f, 2g, 2h, 20a, 21a, 22a, 23a, 24a, 25a, 26a) zum Andrücken der Materialbahn und der Transferfolie an die mindestens eine Stützwalze (1) aufweist, wobei die mindestens eine Andruckrolle (2a, 2b, 2c, 2d, 2e, 2f, 2g, 2h, 20a, 21a, 22a, 23a, 24a, 25a, 26a) mittels mindestens einer federnden Anordnung federnd gelagert ist und wobei die Vorrichtung mindestens eine Einstelleinrichtung zur Änderung einer Federkonstante der mindestens einen federnden Anordnung und somit zur Änderung einer Andruckkraft der mindestens einen Andruckrolle (2a, 2b, 2c, 2d, 2e, 2f, 2g, 2h, 20a, 21a, 22a, 23a, 24a, 25a, 26a) an die mindestens eine Stützwalze (1) aufweist, wobei die mindestens eine Andruckrolle (2a, 2b, 2c, 2d, 2e, 2f, 2g, 2h, 20a, 21a, 22a, 23a, 24a, 25a, 26a) pneumatisch oder hydraulisch gefedert ist, und wobei die mindestens eine federnde Anordnung durch eine Membranfeder (5) gebildet ist, wobei die Membranfeder (5) einen Membranraum (5a), eine den Membranraum (5a) in eine Primärseite (5a') und eine Sekundärseite (5a") trennende Membrane (5b) und einen mit der Membrane (5b) starr verbundenen Kolben (5c) auf der Sekundärseite (5a") zur Übertragung der Federkraft auf die mindestens eine Andruckrolle (2a, 2b, 2c, 2d, 2e, 2f, 2g, 2h, 20a, 21a, 22a, 23a, 24a, 25a, 26a) aufweist.

2. Vorrichtung nach Anspruch 1, wobei die mindestens eine Einstelleinrichtung mindestens eine Steuereinheit zur Einstellung der Federkonstante über mindestens ein Regelventil und mindestens eine Versorgungsleitung (4) umfasst, und wobei mindestens eine der Versorgungsleitungen (4) mit der mindestens einen federnden Anordnung zu deren Versorgung mit einem Stellmedium, das durch Druckluft oder eine Hydraulikflüssigkeit gebildet ist, verbunden ist.

3. Vorrichtung nach Anspruch 2, wobei die mindestens eine federnde Anordnung durch die mindestens eine Steuereinheit fernsteuerbar ist.

4. Vorrichtung nach einem der Ansprüche 2 oder 3, wobei die Steuereinheit zur Verarbeitung digitaler Vorgabewerte geeignet ist.

5. Vorrichtung nach einem der Ansprüche 1 bis 4, wobei die Membranfeder (5) auf der Sekundärseite (5a") eine Dichtungsanordnung (7) aufweist, die die Membranfeder (5) vor eindringenden Stäuben und korrosiven Medien schützt.

6. Vorrichtung nach Anspruch 5, wobei die Dichtungsanordnung (7) aus einer Dichtung (7a) und einem Dichtungsdeckel (7b) gebildet ist, wobei der Kolben (5c) an seiner der Membrane (5b) abgewandten Seite durch die Dichtung (7a) geführt ist.

7. Vorrichtung nach einem der Ansprüche 1 bis 6, wobei die mindestens eine Andruckrolle (2a, 2b, 2c, 2d, 2e, 2f, 2g, 2h, 20a, 21 a, 22a, 23a, 24a, 25a, 26a) auf mindestens einem Schlitten (8a, 8b, 8c, 8d) angeordnet ist, der in Richtung der Längsachse (1a) der mindestens einen Stützwalze (1) beweglich ist.

8. Vorrichtung nach Anspruch 7, wobei der mindestens eine Schlitten (8a, 8b, 8c, 8d) mindestens um die Länge der mindestens einen Stützwalze (1) in Richtung der Längsachse (1 a) der mindestens einen Stützwalze (1) beweglich ist.

9. Vorrichtung nach einem der Ansprüche 1 bis 8, wobei die mindestens eine Andruckrollenwelle (2a', 2b') der jeweiligen Andruckrolle (2a, 2b, 2c, 2d, 2e, 2f, 2g, 2h, 20a, 21 a, 22a, 23a, 24a, 25a, 26a) in einer Lageranordnung (9) montiert ist, die senkrecht zur Längsachse der Andruckrollenwelle (2a', 2b') gesehen einen U-förmigen Querschnitt aufweist.

10. Vorrichtung nach Anspruch 9, wobei die Lageranordnung (9) über eine Lageranordnungswelle (9a) mit einer Grundplatte (10) verbunden ist, wobei die Lageranordnungswelle (9a) parallel zur Andruckrollenwelle (2a', 2b') angeordnet ist.

11. Vorrichtung nach Anspruch 10, wobei die Lageranordnung (9) einen Wegaufnehmer (18) aufweist, der lose derart auf dem Kolben (5c) aufliegt, dass die Andruckrollenwelle (2a', 2b') bei Änderung der Position des Kolbens (5c) auf einer Kreisbahn um die Lageranordnungswelle (9a) beweglich ist.

12. Vorrichtung nach Anspruch 10, wobei die Lageranordnung (9) mit dem Kolben (5c) gelenkig derart verbunden ist, dass die Andruckrollenwelle (2a', 2b') bei Änderung der Position des Kolbens (5c) auf einer Kreisbahn um die Lageranordnungswelle (9a) beweglich ist.

13. Vorrichtung nach einem der Ansprüche 10 bis 12, wobei ein Abstandshalter (11) an der Lageranordnung (9) und/oder an der Grundplatte (10) angeordnet ist, der einen direkten Kontakt zwischen der Lageranordnung (9) und der Grundplatte (10) verhindert.

14. Vorrichtung nach einem der Ansprüche 1 bis 13, wobei mindestens zwei Andruckrollen (2a, 2b, 2c, 2d, 2e, 2f, 2g, 2h) parallel zueinander entlang der Längsachse (1 a) der mindestens einen Stützwalze (1) angeordnet sind.

15. Vorrichtung nach Anspruch 14, wobei die federnden Anordnungen der mindestens zwei parallelen Andruckrollen (2a, 2b, 2c, 2d, 2e, 2f, 2g, 2h) an jeweils eine gesonderte Versorgungsleitung (4) für das Stellmedium angeschlossen sind.

16. Vorrichtung nach Anspruch 14, wobei die federnden Anordnungen der mindestens zwei parallelen Andruckrollen (2a, 2b, 2c, 2d, 2e, 2f, 2g, 2h) an eine gemeinsame Versorgungsleitung (4) für das Stellmedium angeschlossen sind.

17. Vorrichtung nach einem der Ansprüche 14 bis 16, wobei die mindestens zwei parallelen Andruckrollen (2a, 2b, 2c, 2d, 2e, 2f, 2g, 2h) auf einem ersten Schlitten (8a) angeordnet sind.

18. Vorrichtung nach Anspruch 1 bis 17, wobei mindestens zwei Andruckrollen (2a, 20a, 21a, 22a, 23a, 23a, 25a, 26a) in Reihe entlang eines Stützwalzendurchmessers angeordnet sind.

19. Vorrichtung nach Anspruch 18, wobei die federnden Anordnungen der mindestens zwei in Reihe angeordneten Andruckrollen (2a, 20a, 21a, 22a, 23a, 23a, 25a, 26a) an jeweils eine gesonderte Versorgungsleitung (4) für das Stellmedium angeschlossen sind.

20. Vorrichtung nach einem der Ansprüche 10 bis 19, wobei auf der Grundplatte (10) zwei Andruckrollen (2a, 20a; 21 a, 22a; 23a, 23a; 25a, 26a) in Reihe entlang eines Stützwalzendurchmessers als Andruckrollenpaar angeordnet sind.

21. Vorrichtung nach Anspruch 19, wobei die mindestens eine federnde Anordnung der zwei in Reihe angeordneten Andruckrollen (2a, 20a; 21 a, 22a; 23a, 23a; 25a, 26a) in die Grundplatte (10) integriert ist.

22. Vorrichtung nach Anspruch 20, wobei für die zwei Andruckrollen (2a, 20a; 21a, 22a; 23a, 23a; 25a, 26a) eine gemeinsame federnde Anordnung vorgesehen ist.

23. Vorrichtung nach Anspruch 20, wobei für die zwei Andruckrollen (2a, 20a; 21a, 22a; 23a, 23a; 25a, 26a) jeweils eine gesonderte federnde Anordnung vorgesehen ist.

24. Vorrichtung nach einem der Ansprüche 1 bis 23, wobei die mindestens eine Stützwalze (1) beheizt ist.

25. Verwendung einer Vorrichtung nach einem der Ansprüche 1 bis 24 zur mindestens bereichsweisen Übertragung einer Übertragungslage einer Prägefolie auf ein zu beprägendes Material, vorzugsweise zur Bildung von Sicherheitselementen auf Wertdokumenten wie Ausweisen, Karten oder Banknoten, von Bauelementen oder dekorativen Elementen, insbesondere in der Architektur oder anderen technischen Bereichen, von Verpackungsmaterialien, insbesondere in der pharmazeutischen oder Lebensmittelindustrie oder von Bauteilen in der Elektro- oder Elektronikindustrie.

## Claims

1. Apparatus for applying at least one surface section of a transfer layer of a transfer film on a web of material, wherein the apparatus has at least one supporting roll (1) and at least one pressure roller (2a, 2b, 2c, 2d, 2e, 2f, 2g, 2h, 20a, 21a, 22a, 23a, 24a, 25a, 26a) for pressing the web of material and the transfer film onto the at least one supporting roll (1), wherein the at least one pressure roller (2a, 2b, 2c, 2d, 2e, 2f, 2g, 2h, 20a, 21a, 22a, 23a, 24a, 25a, 26a) is spring-mounted via at least one resilient arrangement, and wherein the apparatus has at least one adjustment device for changing a spring constant of the at least one resilient arrangement and thus for changing a pressure force of the at least one pressure roller (2a, 2b, 2c, 2d, 2e, 2f, 2g, 2h, 20a, 21a, 22a, 23a, 24a, 25a, 26a) onto the at least one supporting roll (1), wherein the at least one pressure roller (2a, 2b, 2c, 2d, 2e, 2f, 2g, 2h, 20a, 21a, 22a, 23a, 24a, 25a, 26a) is pneumatically or hydraulically sprung, and wherein the at least one resilient arrangement is in the form of a diaphragm spring (5), with the diaphragm spring (5) having a diaphragm space (5a), a diaphragm (5b) separating the diaphragm space (5a) into a primary side (5a') and a secondary side (5a''), and a piston (5c), rigidly connected to the diaphragm (5b), on the secondary side (5a") for transmitting the spring force onto the at least one pressure roller (2a, 2b, 2c, 2d, 2e, 2f, 2g, 2h, 20a, 21a, 22a, 23a, 24a, 25a, 26a).

2. Apparatus according to Claim 1, wherein the at least one adjustment device comprises at least one control unit for adjusting the spring constant via at least one control valve and at least one supply line (4), and wherein at least one of the supply lines (4) is connected to the at least one resilient arrangement in order to supply the same with an actuating medium which is formed by compressed air or a hydraulic fluid.

3. Apparatus according to Claim 2, wherein the at least one resilient arrangement can be remote-controlled by means of the at least one control unit.

4. Apparatus according to either of Claims 2 or 3, wherein the control unit is suitable for processing predefined digital values.

5. Apparatus according to one of Claims 1 to 4, wherein the diaphragm spring (5) has, on the secondary side (5a"), a sealing arrangement (7) which protects the diaphragm spring (5) against penetrating dust and corrosive media.

6. Apparatus according to Claim 5, wherein the sealing arrangement (7) is in the form of a seal (7a) and a seal cover (7b), with the piston (5c) being guided through the seal (7a) on its side which faces away from the diaphragm (5b).

7. Apparatus according to one of Claims 1 to 6, wherein the at least one pressure roller (2a, 2b, 2c, 2d, 2e, 2f, 2g, 2h, 20a, 21a, 22a, 23a, 24a, 25a, 26a) is arranged on at least one carriage (8a, 8b, 8c, 8d) which can be moved in the direction of the longitudinal axis (1a) of the at least one supporting roll (1).

8. Apparatus according to Claim 7, wherein the at least one carriage (8a, 8b, 8c, 8d) can be moved at least by the length of the at least one supporting roll (1) in the direction of the longitudinal axis (1a) of the at least one supporting roll (1).

9. Apparatus according to one of Claims 1 to 8, wherein the at least one pressure-roller shaft (2a', 2b') of the respective pressure roller (2a, 2b, 2c, 2d, 2e, 2f, 2g, 2h, 20a, 21a, 22a, 23a, 24a, 25a, 26a) is mounted in a bearing arrangement (9) which has a U-shaped cross section when viewed perpendicularly to the longitudinal axis of the pressure-roller shaft (2a', 2b').

10. Apparatus according to Claim 9, wherein the bearing arrangement (9) is connected to a base plate (10) via a bearing-arrangement shaft (9a) which is arranged parallel to the pressure-roller shaft (2a', 2b').

11. Apparatus according to Claim 10, wherein the bearing arrangement (9) has a displacement transducer (18) which is located loosely on the piston (5c) such that the pressure-roller shaft (2a', 2b') moves around the bearing-arrangement shaft (9a) when the position of the piston (5c) in a circular path changes.

12. Apparatus according to Claim 10, wherein the bearing arrangement (9) is connected to the piston (5c) in an articulated manner such that the pressure-roller shaft (2a', 2b') moves around the bearing-arrangement shaft (9a) when the position of the piston (5c) in a circular path changes.

13. Apparatus according to one of Claims 10 to 12, wherein a spacer (11) is arranged on the bearing arrangement (9) and/or on the base plate (10), which spacer prevents direct contact between the bearing arrangement (9) and the base plate (10).

14. Apparatus according to one of Claims 1 to 13, wherein at least two pressure rollers (2a, 2b, 2c, 2d, 2e, 2f, 2g, 2h) are arranged mutually parallel along the longitudinal axis (1a) of the at least one supporting roll (1).

15. Apparatus according to Claim 14, wherein the resilient arrangements of the at least two parallel pressure rollers (2a, 2b, 2c, 2d, 2e, 2f, 2g, 2h) are connected to in each case one separate supply line (4) for the actuating medium.

16. Apparatus according to Claim 14, wherein the resilient arrangements of the at least two parallel pressure rollers (2a, 2b, 2c, 2d, 2e, 2f, 2g, 2h) are connected to a common supply line (4) for the actuating medium.

17. Apparatus according to one of Claims 14 to 16, wherein the at least two parallel pressure rollers (2a, 2b, 2c, 2d, 2e, 2f, 2g, 2h) are arranged on a first carriage (8a).

18. Apparatus according to Claims 1 to 17, wherein at least two pressure rollers (2a, 20a, 21a, 22a, 23a, 24a, 25a, 26a) are arranged in series along a supporting-roll diameter.

19. Apparatus according to Claim 18, wherein the resilient arrangements of the at least two pressure rollers (2a, 20a, 21a, 22a, 23a, 24a, 25a, 26a), which are arranged in series, are connected to in each case one separate supply line (4) for the actuating medium.

20. Apparatus according to one of Claims 10 to 19, wherein two pressure rollers (2a, 20a; 21a, 22a; 23a, 24a; 25a, 26a) are arranged on the base plate (10) as a pressure-roller pair in series along a supporting-roll diameter.

21. Apparatus according to Claim 19, wherein the at least one resilient arrangement of the two pressure rollers (2a, 20a; 21a, 22a; 23a, 24a; 25a, 26a), which are arranged in series, is integrated in the base plate (10).

22. Apparatus according to Claim 20, wherein a common resilient arrangement is provided for the two pressure rollers (2a, 20a; 21a, 22a; 23a, 24a; 25a, 26a).

23. Apparatus according to Claim 20, wherein in each case a separate resilient arrangement is provided for the two pressure rollers (2a, 20a; 21a, 22a; 23a, 24a; 25a, 26a).

24. Apparatus according to one of Claims 1 to 23, wherein the at least one supporting roll (1) is heated.

25. Use of an apparatus according to one of Claims 1 to 24 for transferring, at least in regions, a transfer layer of an embossing film to a material to be embossed, preferably in order to form security elements on valuable documents such as identity cards, cards or banknotes, components or decorative elements, in particular in the field of architecture or other technical fields, packing materials, in particular in the pharmaceutical or foodstuff industries, or components in the electronics industry.

## Revendications

1. Dispositif destiné à appliquer au moins une section de surface d'une couche de transfert d'un film de transfert sur une bande de matière, le dispositif comprenant au moins un rouleau d'appui (1) et au moins un rouleau de pression (2a, 2b, 2c, 2d, 2e, 2f, 2g, 2h, 20a, 21a, 22a, 23a, 24a, 25a, 26a) destiné à presser la bande de matière et le film de transfert sur le au moins un rouleau d'appui (1), le au moins un rouleau de pression (2a, 2b, 2c, 2d, 2e, 2f, 2g, 2h, 20a, 21a, 22a, 23a, 24a, 25a, 26a) étant monté sur ressort au moyen d'au moins un agencement à ressort et le dispositif comprenant au moins un système de réglage destiné à modifier une constante de rappel du au moins un agencement à ressort et ainsi à modifier une force de pression du au moins un rouleau de pression (2a, 2b, 2c, 2d, 2e, 2f, 2g, 2h, 20a, 21a, 22a, 23a, 24a, 25a, 26a) sur le au moins un rouleau d'appui (1), le au moins un rouleau de pression (2a, 2b, 2c, 2d, 2e, 2f, 2g, 2h, 20a, 21a, 22a, 23a, 24a, 25a, 26a) étant suspendu sur ressort de manière pneumatique ou hydraulique, et le au moins un agencement à ressort étant formé par un ressort à membrane (5), le ressort à membrane (5) comprenant une chambre de membrane (5a), une membrane (5b) séparant la chambre de membrane (5a) en un côté principal (5a') et un côté secondaire (5a") et un piston (5c) relié rigidement à la membrane (5b) sur le côté secondaire (5a") pour transférer la force du ressort sur le au moins un rouleau de pression (2a, 2b, 2c, 2d, 2e, 2f, 2g, 2h, 20a, 21a, 22a, 23a, 24a, 25a, 26a).

2. Dispositif selon la revendication 1, le au moins un système de réglage comportant au moins une unité de commande destinée à régler la constante de rappel par l'intermédiaire d'au moins une soupape de régulation et au moins une conduite d'alimentation (4), et au moins une des conduites d'alimentation (4) étant reliée à le au moins un agencement à ressort pour l'alimenter en milieu de commande, qui est formé par de l'air comprimé ou un fluide hydraulique.

3. Dispositif selon la revendication 2, le au moins un agencement à ressort pouvant être commandé à distance par la au moins une unité de commande.

4. Dispositif selon l'une quelconque des revendications 2 ou 3, l'unité de commande convenant pour traiter des valeurs par défaut numériques.

5. Dispositif selon l'une quelconque des revendications 1 à 4, le ressort à membrane (5) comprenant sur le côté secondaire (5a") un agencement d'étanchéité (7), qui empêche les poussières et les milieux corrosifs de pénétrer dans le ressort à membrane (5).

6. Dispositif selon la revendication 5, l'agencement d'étanchéité (7) étant formé d'un joint (7a) et d'un couvercle d'étanchéité (7b), le piston (5c) étant guidé sur son côté opposé à la membrane (5b) par le joint (7a).

7. Dispositif selon l'une quelconque des revendications 1 à 6, le au moins un rouleau de pression (2a, 2b, 2c, 2d, 2e, 2f, 2g, 2h, 20a, 21a, 22a, 23a, 24a, 25a, 26a) étant disposé sur au moins un chariot (8a, 8b, 8c, 8d), qui est mobile en direction de l'axe longitudinal (1a) du au moins un rouleau d'appui (1).

8. Dispositif selon la revendication 7, le au moins un chariot (8a, 8b, 8c, 8d) étant mobile au moins sur la longueur du au moins un rouleau d'appui (1) en direction de l'axe longitudinal (1a) du au moins un rouleau d'appui (1).

9. Dispositif selon l'une quelconque des revendications 1 à 8, le au moins un arbre de rouleau de pression (2a', 2b') du rouleau de pression respectif (2a, 2b, 2c, 2d, 2e, 2f, 2g, 2h, 20a, 21a, 22a, 23a, 24a, 25a, 26a) étant monté dans un agencement de support (9), qui comprend, vu perpendiculairement à l'axe longitudinal de l'arbre de rouleau de pression (2a', 2b'), une section transversale en forme de U.

10. Dispositif selon la revendication 9, l'agencement de support (9) étant relié par un arbre d'agencement de support (9a) à une plaque de base (10), l'arbre d'agencement de support (9a) étant disposé parallèlement à l'arbre de rouleau de pression (2a', 2b').

11. Dispositif selon la revendication 10, l'agencement de support (9) comprenant un capteur de déplacement (18), qui repose de façon lâche sur le piston (5c) de telle sorte que l'arbre de rouleau de pression (2a', 2b'), lorsque la position du piston (5c) est modifiée, est mobile sur une trajectoire circulaire autour de l'arbre d'agencement de support (9a).

12. Dispositif selon la revendication 10, l'agencement de support (9) étant relié de manière articulée au piston (5c) de telle sorte que l'arbre de rouleau de pression (2a', 2b'), lorsque la position du piston (5c) est modifiée, est mobile sur une trajectoire circulaire autour de l'arbre d'agencement de support (9a).

13. Dispositif selon l'une quelconque des revendications 10 à 12, une entretoise (11) étant disposée sur l'agencement de support (9) et/ou sur la plaque de base (10), qui empêche un contact direct entre l'agencement de support (9) et la plaque de base (10).

14. Dispositif selon l'une quelconque des revendications 1 à 13, au moins deux rouleaux de pression (2a, 2b, 2c, 2d, 2e, 2f, 2g, 2h) étant disposés parallèlement l'un à l'autre le long de l'axe longitudinal (1a) du au moins un rouleau d'appui (1).

15. Dispositif selon la revendication 14, les agencements à ressort des au moins deux rouleaux de pression parallèles (2a, 2b, 2c, 2d, 2e, 2f, 2g, 2h) étant raccordés à respectivement une conduite d'alimentation séparée (4) pour le milieu de commande.

16. Dispositif selon la revendication 14, les agencements à ressort des au moins deux rouleaux de pression parallèles (2a, 2b, 2c, 2d, 2e, 2f, 2g, 2h) étant raccordés à une conduite d'alimentation commune (4) pour le milieu de commande.

17. Dispositif selon l'une quelconque des revendications 14 à 16, les au moins deux rouleaux de pression parallèles (2a, 2b, 2c, 2d, 2e, 2f, 2g, 2h) étant disposés sur un premier chariot (8a).

18. Dispositif selon l'une quelconque des revendications 1 à 17, au moins deux rouleaux de pression (2a, 20a, 21a, 22a, 23a, 23a, 25a, 26a) étant disposés en rangée le long d'un diamètre de rouleau d'appui.

19. Dispositif selon la revendication 18, les agencements à ressort des au moins deux rouleaux de pression disposés en rangée (2a, 20a, 21a, 22a, 23a, 23a, 25a, 26a) étant raccordés à respectivement une conduite d'alimentation séparée (4) pour le milieu de commande.

20. Dispositif selon l'une quelconque des revendications 10 à 19, deux rouleaux de pression (2a, 20a ; 21a, 22a ; 23a, 23a ; 25a, 26a) étant disposés en rangée le long d'un diamètre de rouleau d'appui comme paire de rouleaux de pression sur la plaque de base (10).

21. Dispositif selon la revendication 19, le au moins un agencement à ressort des deux rouleaux de pression disposés en rangée (2a, 20a ; 21a, 22a ; 23a, 23a ; 25a, 26a) étant intégré dans la plaque de base (10).

22. Dispositif selon la revendication 20, un agencement à ressort commun étant prévu pour les deux rouleaux de pression (2a, 20a ; 21a, 22a ; 23a, 23a ; 25a, 26a).

23. Dispositif selon la revendication 20, respectivement un agencement à ressort séparé étant prévu pour les deux rouleaux de pression (2a, 20a ; 21a, 22a ; 23a, 23a ; 25a, 26a).

24. Dispositif selon l'une quelconque des revendications 1 à 23, le au moins un rouleau d'appui (1) étant chauffé.

25. Utilisation d'un dispositif selon l'une quelconque des revendications 1 à 24 destiné à transférer au moins par zones une couche de transfert d'un film estampé sur une matière à estamper de préférence pour former des éléments de sécurité sur des documents de valeur comme des papiers d'identité, des cartes ou des billets de banque, des composants ou des éléments décoratifs, en particulier dans l'architecture ou d'autres zones techniques, de matériaux d'emballage, en particulier dans l'industrie pharmaceutique ou agroalimentaire ou de composants dans l'industrie électrique ou électronique.
